Europäisches Patentamt

European Patent Office

Office européen des brevets

(11) Veröffentlichungsnummer: **0 280 136**
**A1**

## (12) EUROPÄISCHE PATENTANMELDUNG

(21) Anmeldenummer: 88102149.7

(22) Anmeldetag: 13.02.88

(51) Int. Cl.⁴: **F16D 23/04**

(30) Priorität: 21.02.87 DE 3705632

(43) Veröffentlichungstag der Anmeldung:
31.08.88 Patentblatt 88/35

(84) Benannte Vertragsstaaten:
DE ES FR GB IT SE

(71) Anmelder: ZWN ZAHNRADWERK NEUENSTEIN
GMBH & CO.
Hermann-Hagenmeyer-Strasse
D-7113 Neuenstein(DE)

(72) Erfinder: Müller, Erich R.
Hohe Strasse 15
D-7110 Öhringen-Cappel(DE)
Erfinder: Priwitzer, Günther
Hofgartenweg 20
D-7110 Öhringen(DE)
Erfinder: Martin, Felix
Hermann-Hagenmeyerstrasse 16
D-7113 Neuenstein(DE)

(74) Vertreter: Witte, Alexander, Dr.-Ing.
Schickhardtstrasse 24
D-7000 Stuttgart 1(DE)

(54) Reibschlüssiges Element, insbesondere Synchronisierungskörper in Stufengetrieben von Kraftfahrzeugen.

(57) Das Element, weist einen Grundkörper (2), mit einer mindestens abschnittsweise kegelförmigen Oberfläche (12) mit einer Achse (4) auf. Auf der Oberfläche (12) ist ein hohlkegelstumpfförmiger Reibkörper (20) angeordnet.

Um den Reibkörper (20) einfacher und ohne insbesondere thermische Belastung des Grundkörpers (2) montieren zu können und außerdem die Gefahr des Festfressens des Reibkörpers (20) zu vermindern, weist der Reibkörper (20) an seinen beiden kegelstumpfförmigen Oberflächen Reibmaterial auf und der Reibkörper (20) ist in Richtung der Achse (4) formschlüssig am Grundkörper (2) fixiert und in Umfangsrichtung am Grundkörper (2) schwimmend gelagert.

Fig. 1

## Reibschlüssiges Element, insbesondere Synchronisierungskörper in Stufengetrieben von Kraftfahrzeugen

Die Erfindung betrifft ein reibschlüssiges Element, insbesondere einen Synchronisierungskörper in Stufengetrieben von Kraftfahrzeugen mit einem Grundkörper, der mindestens abschnittsweise eine kegelförmige Oberfläche mit einer Achse aufweist, wobei auf der Oberfläche ein hohlkegelstumpfförmiger Reibkörper angeordnet ist.

Reibschlüssige Elemente der vorstehend genannten Art sind in der Form von Synchronisierungsringen allgemein bekannt, z.B. aus der DE-PS 34 17 813.

Der bekannte Synchronisierungsring wird dadurch hergestellt, daß ein körniges, sinterbares Reibmaterial auf ein ebenes Trägerblech aufgestreut und mit dem Trägerblech in einem Ofen gesintert wird. Das ebene Trägerblech wird alsdann durch ein-oder mehrmaliges Pressen verdichtet, dann zu einem hohlkegelstumpfförmigen Reibkörper gebogen und alsdann in den metallischen Grundkörper des Synchronringes eingeschweißt.

Das bekannte Element ist damit relativ aufwendig in der Herstellung, weil die separaten Reibkörper einzeln in die Grundkörper eingeschweißt werden müssen und sich hierdurch thermische Belastungen und damit Formänderungen des Grundkörpers ergeben können. Außerdem hat das bekannte Element den Nachteil, daß bei einer hohen mechanischen Belastung der Reibbelag des Reibkörpers sich an dem jeweils in Anlage befindlichen Gegenkörper festfressen kann, was zu einem Abschälen zumindest des Reibbelages, unter Umständen sogar des gesamten Reibkörpers führen kann.

Der Erfindung liegt demgegenüber die Aufgabe zugrunde, ein Element der eingangs genannten Art dahingehend weiterzubilden, daß die Montage des Reibkörpers am Grundkörper vereinfacht wird, daß der Grundkörper bei dieser Montage keinen thermischen Belastungen ausgesetzt wird und daß - schließlich die Gefahr des Festfressens des Reibbelages an einem Gegenkörper zumindest deutlich vermindert, wenn nicht sogar ganz ausgeschaltet wird.

Diese Aufgabe wird erfindungsgemäß dadurch gelöst, daß der Reibkörper an seinen beiden kegelstumpfförmigen Oberflächen Reibmaterial aufweist und daß der Reibkörper in Richtung der Achse formschlüssig am Grundkörper fixiert und in Umfangsrichtung am Grundkörper schwimmend gelagert ist.

Die der Erfindung zugrundeliegende Aufgabe wird auf diese Weise vollkommen gelöst. Die formschlüssige Befestigung des Reibkörpers am Grundkörper kann typischerweise durch Einklipsen oder Anklemmen des Reibkörpers erfolgen, wobei allenfalls eine geringe Formänderungsarbeit am Reibkörper aufzubringen ist, die den üblicherweise metallischen Grundkörper unbeeinflußt läßt. Die Formänderungsarbeit kann deswegen gering sein, weil der Reibkörper in Umfangsrichtung lose auf dem Grundkörper sitzt, so daß die ggf. erforderliche Formänderung zum Einklipsen oder zum Ausformen einer axialen Fixierung gering bleiben kann.

Die Gefahr des Festfressens des Reibkörpers wird dadurch weitgehend ausgeräumt, daß der Reibkörper bei dem erfindungsgemäßen Element zwei äußere Reibflächen und nicht nur deren eine, wie beim Stand der Technik, aufweist. Dies bedeutet, daß selbst bei einem Festfressen eines dieser beiden Reibbeläge, sei es am Grundkörper des erfindungsgemäßen Elementes oder an einer Anlagefläche eines Gegenkörpers die reibschlüssige Verbindung an der jeweils anderen Oberfläche unbeeinflußt bleibt, so daß die Reibschlußeigenschaften selbst dann erhalten bleiben, wenn eine Oberfläche des Reibkörpers irreversibel festgefressen ist. Die Gefahr eines solchen einseitigen Festfressens ist jedoch ebenfalls deutlich reduziert, weil sich bei hoher Dauer-oder Spitzenbelastung des Reibkörpers eher eine Zwischendrehzahl des Reibkörpers zwischen dem erfindungsgemäßen Element und dem jeweiligen Gegenkörper einstellen wird, die, allerdings nur für den Fall der Überlastung, einen gewissen Schlupf zwischen dem Element und dem Gegenkörper zuläßt, wobei diese Verhältnisse so optimiert werden können, daß sich ein solcher Schlupf nur kurzfristig und nur insoweit einstellt, wie dies erforderlich ist, um eine irreversible Schädigung der Reibbeläge zu verhindern.

Insgesamt hat damit das erfindungsgemäße Element nicht nur den Vorteil, den Montagevorgang wesentlich zu vereinfachen, auch die Lebensdauer derartiger Elemente ist deutlich erhöht.

Bei einer Ausführungsform der Erfindung ist der Reibkörper einstückig und besteht aus Reibmaterial.

Diese Maßnahme hat den Vorteil, daß eine einfache Fertigung auch des Reibkörpers möglich ist, der z.B. aus Reibmaterial gesintert oder gepreßt werden kann.

Bei einem anderen Ausführungsbeispiel der Erfindung ist der Reibkörper radial mehrteilig und besteht aus mindestens zwei Reibbelägen, wobei vorzugsweise zwischen den Reibbelägen noch ein Trägerkörper angeordnet ist.

Diese Maßnahme hat den Vorteil, daß für das Vorsehen zweier Reibbeläge auch Reibbeläge unterschiedlichen Reibmaterials gewählt werden können, so daß eine individuelle Anpassung an die Verhältnisse auf der Innenseite und der Außenseite des Reibkörpers möglich ist. Ein zwischen den Reibbelägen eingefügter Trägerkörper hat den Vorteil, den Reibkörper insgesamt mechanisch zu stabilisieren oder ihm eine gewisse Elastizität zu verleihen, je nachdem, wie dies von Fall zu Fall gewünscht wird. Zu diesem Zwecke kann der Trägerkörper z.B. aus Metall, Kunststoff, Keramik oder Papier oder aus einer Kombination dieser Elemente bestehen.

Bei einer bevorzugten Ausgestaltung der Erfindung ist der Reibkörper in einer radialen Eindrehung des Grundkörpers angeordnet, deren axiale Breite größer als oder gleich groß wie die radiale Breite des Reibkörpers ist.

Diese Maßnahme hat den Vorteil, daß der Reibkörper besonders gut formschlüssig axial fixiert ist, weil er sich in einer allseits umgebenden Eindrehung befindet, in die er leicht eingeklipst werden kann und die ein axiales Ausweichen sicher vermeidet.

Bei einer anderen Ausführungsform der Erfindung liegt der Reibkörper jedoch auf der kegelförmigen Oberfläche auf und ist in der Verjüngungsrichtung der Oberfläche durch deren Konizität sowie in Öffnungsrichtung durch angrenzende Getriebeteile axial gehalten.

Diese Maßnahme hat den Vorteil, daß eine einfachere Anordnung entsteht, bei der ein separates Einbringen einer radialen Eindrehung entbehrlich ist.

Bei einer weiteren Ausgestaltung der Erfindung mit einem Element mit einer an eine kegelförmige Außenoberfläche axial angrenzenden Ringschulter ist vorgesehen, daß der Reibkörper in einer radialen Eindrehung in der Außenoberfläche angeordnet ist, die in eine axiale Eindrehung in der Ringschulter übergeht.

Diese Maßnahme hat den Vorteil, daß die Außenoberfläche bei derartigen Elementen über eine besonders große axiale Breite genutzt werden kann.

Bei einer weiteren Ausführungsform eines erfindungsgemäßen Elementes ist der Reibkörper mit einer radialen umlaufenden Wulst versehen, die in eine radiale Eindrehung der kegelförmigen Fläche greift.

Diese Maßnahme hat den Vorteil, daß die Montage des Reibkörpers besonders einfach ist, weil die radiale, umlaufende Wulst ein leicht klipsbares Element bildet, während es andererseits auch möglich ist, die radiale Wulst erst beim Montieren des Reibkörpers auf dem Grundkörper auszubilden.

Bei einer weiteren bevorzugten Ausführungsform der Erfindung besteht der Reibkörpers aus einem gebogenen Zuschnitt, dessen freie Enden mittels einer formschlüssigen Ausbildung miteinander verbunden sind.

Diese Maßnahme hat den Vorteil, daß der Reibkörper ständig über 360° Umfang mit der Reibfläche zur Verfügung steht und in Umfangsrichtung einen mechanisch stabilen Zusammenhalt aufweist.

Bei einer anderen Ausführungsform der Erfindung, bei der der Reibkörper ebenfalls aus einem gebogenen Zuschnitt besteht, sind dessen freie Enden jedoch unverbunden.

Diese Maßnahme hat den Vorteil, daß durch Vorsehen eines kleinen Abstandes zwischen den freien Enden des Zuschnittes der Durchmesser des Reibkörpers zur Montage am Grundkörper durch Zusammendrücken leicht verändert werden kann, so daß der zusammengebogene Reibkörper z.B. in eine radiale Eindrehung einer kegelförmigen Innenoberfläche des Grundkörpers eingesetzt werden kann und sich dort elastisch wieder vergrößert, um damit formschlüssig in der radialen Eindrehung zu sitzen.

Weitere Vorteile der Erfindung ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung verwendbar sind, ohne den Rahmen der vorliegenden Erfindung zu verlassen. Insbesondere versteht sich, daß die in allgemeiner Form beschriebenen Anordnungsmöglichkeiten des Reibkörpers sowohl für Innen-wie auch für Außenoberflächen geeignet sind und daß bei Elementen mit Reibkörpern sowohl an der Innen-wie auch an der Außenoberfläche unterschiedliche Arten der beschriebenen Ausführungsformen von Reibkörpern bzw. unterschiedliche Arten von deren Anbringung eingesetzt werden können.

Ausführungsbeispiele der Erfindung sind in der Zeichnung dargestellt und werden in der nachfolgenden Beschreibung näher erläutert. Es zeigen:

Fig. 1 eine schematische Darstellung, im Schnitt, einer Ausführungsform eines erfindungsgemäßen Elementes, nämlich eines Synchronringes für ein Stufengetriebe eines Kraftfahrzeuges;

Fig. 2 bis 4 in vergrößertem Maßstab, abgebrochen dargestellt, weitere Darstellungen ähnlich Fig. 1 zur Erläuterung weiterer Ausführungsbeispiele der Erfindung;

Fig. 5 eine Draufsicht, in axialer Richtung, abgebrochen dargestellt, des Reibkörpers des Ausführungsbeispiels gemäß Fig. 1

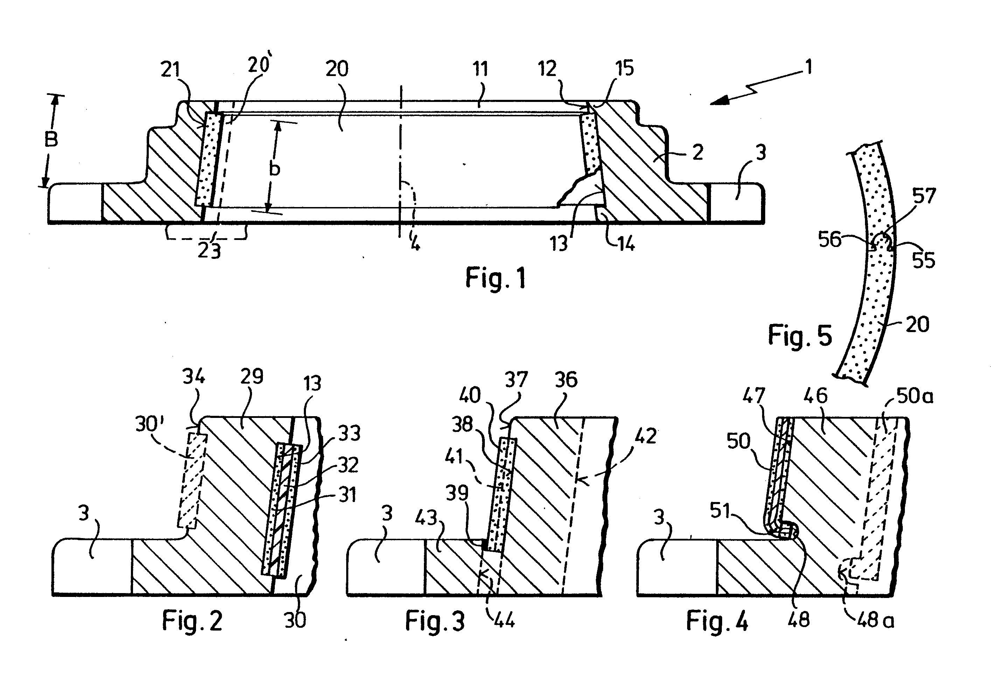

In Fig. 1 bezeichnet 1 insgesamt einen Synchronring für ein Stufengetriebe eines Kraftfahrzeuges. Der Synchronring 1 weist einen metallischen Grundkörper 2 auf, der an seinem Umfang mit einer Außenverzahnung 3 versehen ist. Die Drehachse des Synchronringes 1 ist mit 4 bezeichnet.

Der Synchronring 1 gemäß Fig. 1 weist eine innere kegelförmige Öffnung 11 mit einer Oberfläche 12 auf. In die Oberfläche 12 ist eine radiale Eindrehung 13 eingebracht und zwar derart, daß an beiden axialen Grenzflächen jeweils noch ein Rand 14 bzw. 15 des Körpers 2 stehen bleibt.

In die radiale Eindrehung 13 ist ein hohlkegelstumpfförmiger Reibkörper 20 eingesetzt, der sowohl an seiner Außenoberfläche 21 wie auch an seiner Innenoberfläche 22 Reibmaterial aufweist. Hierzu ist der Reibkörper 20 im Ausführungsbeispiel gemäß Fig. 1 einstückig und aus Reibmaterial hergestellt.

Mit 20 ist in der linken Hälfte von Fig. 1 angedeutet, daß der Reibkörper auch auf einer Oberfläche 12 ohne radiale Eindrehung 13 angeordnet sein kann.

Die axiale Breite b des Reibkörpers 20 (gemessen entlang einer Mantellinie) ist etwas kleiner als oder gleich groß wie die entsprechende axiale Breite B der radialen Eindrehung 13 bzw. die axiale Breite der Oberfläche 12.

Auf diese Weise wird erreicht, daß der Reibkörper 20 in Richtung der Achse 4 an den Rändern 14 bzw. 15 bzw. durch die Konizität der Oberfläche 12 in einer Richtung in Fig. 1 nach oben und durch angrenzende Getriebeteile 23 in Fig. 1 axial nach unten formschlüssig fixiert ist, während eine Fixierung in Umfangsrichtung des Reibkörpers 20 nicht vorgesehen ist. Der Reibkörper 20 ist daher in Umfangsrichtung - schwimmend im Körper 2 gelagert und kann sich in diesem drehen.

Wird nun ein in Fig. 1 nicht dargestellter Gegenkörper in die kegelförmige Öffnung 11 eingeführt und gelangt mit einer außenkegelförmigen Oberfläche an die Innenoberfläche 22 des Reibkörpers 20, entsteht ein Reibschluß zwischen diesem Gegenkörper und dem Synchronring 1. Bei entsprechender Betätigungskraft in Richtung der Achse 4 entsteht ein erster Reibschluß zwischen der Oberfläche des Gegenkörpers und der Innenoberfläche 22 des Reibkörpers 20 sowie zwischen der Außenoberfläche 21 des Reibkörpers 20 und der kegelförmigen Oberfläche der radialen Eindrehung 13. Der Gegenkörper ist dann mit dem Synchronring 1 drehstarr verbunden.

Wird nun die reibschlüssige, drehstarre Verbindung zwischen Gegenkörper und Synchronring 1 einer Überlastung, sei es als Dauerbelastung oder als Spitzenbelastung ausgesetzt, so kann der Reibkörper 20 eine bestimmte Zwischendrehzahl zwischen den Drehzahlen des Synchronrings 1 und des Gegenkörpers einnehmen. Hierdurch werden die Oberflächen 21, 22 des Reibkörpers 20 geschont.

Aber selbst wenn durch eine Überlastung der reibschlüssigen, drehstarren Verbindung zwischen Gegenkörper und Synchronring 1 eine der beiden Oberflächen 21 oder 22 sich an der jeweiligen Gegenoberfläche festfressen sollte, so würde die Möglichkeit der reibschlüssigen Verbindung immer noch erhalten bleiben, weil die jeweils andere Oberfläche 21 bzw. 22 noch intakt wäre.

Fig. 2 zeigt ein variiertes Ausführungsbeispiel, bei dem auch ein Metallkörper 29 wieder mit einer radialen Inneneindrehung 13 versehen ist. In der Eindrehung 13 ist ein hohlkegelstumpfförmiger Reibkörper 30 angeordnet, der jedoch bei diesem Ausführungsbeispiel nicht einstückig sondern radial dreigeschichtet ausgebildet ist. Der Reibkörper 30 weist nämlich einen äußeren Reibbelag 31, einen mittleren Trägerkörper 32 sowie einen inneren Reibbelag 33 auf, die jeweils konzentrisch zueinander angeordnet sind und gemeinsam den Reibkörper 30 bilden.

Der Trägerkörper 32 kann aus Metall, Kunststoff, Keramik oder Papier oder in Sandwich-Bauweise aus einer Kombination dieser Werkstoffe bestehen.

Im übrigen ist die Funktion des Reibkörpers 30 so wie die des Reibkörpers 20, die weiter oben zu Fig. 1 erläutert wurde.

Alternativ oder zusätzlich kan am Körper 29 gemäß Fig. 2 an ener kegelförmigen Außenfläche 34 eine entsprechende radiale Eindrehung vorgesehen sein, in der dann ein entsprechender Reibkörper 30' angeordnet ist.

Fig. 3 zeigt eine weitere Variante eines erfindungsgemäßen Elementes mit einem Körper 36, der wiederum eine kegelförmige Außenfläche 37 aufweist. In dieser Außenfläche 37 ist wiederum eine radiale Eindringung 38 angebracht, die zu einer die Außenverzahnung 3 tragenden Ringschulter 43 hin in eine axiale Eindrehung 39 übergeht.

Ein hohlkegelstumpfförmiger Reibkörper 40 ist in diese Eindrehungen 38 und 29 eingesetzt und dadurch axial fixiert. Mit einer Linie 41 im Reibkörper 40 ist angedeutet, daß diese sowohl einstückig wie auch mehrteilig ausgebildet sein kann, wie dies bereits geschildert wurde. Mittels einer weiteren Linie 42 ist angedeutet, daß sich im Inneren des Körpers 36 ein weiterer Reibkörper befinden kann, der z.B. wie der gemäß Fig. 1 und Fig. 2 ausgebildet sein kann.

Statt einer axialen Eindrehung 39 in der Ringschulter 43 ist auch denkbar, dort die Ringschulter 43 durchsetzende Bohrungen oder Langlöcher 44 vorzusehen, in die dann entsprechende axiale Zapfen oder Abschnitte eingreifen würden.

Beim Ausführungsbeispiel gemäß Fig. 4 ist ein Körper 46 wiederum mit einer kegelförmigen Außenfläche 47 versehen, die in der Nähe der Außenverzahnung 3 in eine radiale Eindrehung 48 verhältnismäßig geringer Breite übergeht. Ein torusförmiger Reibkörper 50, der bereits mehrfach erläuterten Bauart, ist auf die Außenfläche 47 aufgesetzt und weist an seinem unteren Ende eine radiale Wulst 51 bzw. Umbiegung auf, die formschlüssig in die radiale Eindrehung 48 greift, um den Reibkörper 50 axial zu fixieren.

Mit 48a, 50a ist angedeutet, daß ein entsprechender Reibkörper 50a auch an einer Innenbohrung des Körpers 46 angeordnet sein kann.

Schließlich zeigt Fig. 5 noch den Reibkörper 20 aus Fig. 1 in axialer Draufsicht. Der Reibkörper 20 wurde durch kreisförmiges Umbiegen eines zuvor ebenen Zuschnittes hergestellt, so daß an einer Position des Umfanges eine Trennlinie 55 zwischen den freien Enden des Zuschnittes vorliegt. Dort ist der Reibkörper 20 so ausgebildet, daß ein freies Ende mit einer Nase 56 und das gegenüberliegende freie Ende mit einer entsprechenden Aussparung 57 versehen ist, um eine formschlüssige Verbindung durch Ineinanderklipsen von Nase 56 und Aussparung 57 zu ermöglichen.

Es versteht sich jedoch, daß die freien Enden im Bereich der Trennlinie 55 auch verschweißt, verklebt oder dergleichen werden können.

Bei anderen Ausführungsbeispielen der Erfindung sind die freien Enden im Bereich der Trennlinie 55 überhaupt nicht miteinander verbunden, es wird vielmehr sogar ein gewisser Abstand zwischen den freien Enden freigelassen. Dies eröffnet z.B. die Möglichkeit, den torusförmigen Reibkörper 20 durch Zusammendrücken im Durchmesser etwas verkleinern zu können, um ihn leichter z.B. nach Art der Fig. 1 montieren zu können.

## Ansprüche

1. Reibschlüssiges Element, insbesondere Synchronisierungskörper (1) in Stufengetrieben von Kraftfahrzeugen mit einem Grundkörper (2; 29; 36; 46), der mindestens abschnittsweise eine kegelförmige Oberfläche (12; 34; 37; 47) mit einer Achse (4) aufweist, wobei auf der Oberfläche (12; 34; 37; 47) ein hohlkegelstumpfförmiger Reibkörper (20; 30; 40; 50) angeordnet ist, dadurch gekennzeichnet, daß der Reibkörper (20; 30; 40; 50) an seinen beiden kegelstumpfförmigen Oberflächen Reibmaterial aufweist und daß der Reibkörper (20; 30; 40; 50) in Richtung der Achse (4) formschlüssig am Grundkörper (2; 29; 36; 46) fixiert und in Umfangsrichtung am Grundkörper (2; 29; 36; 46) schwimmend gelagert ist.

2. Element nach Anspruch 1, dadurch gekennzeichnet, daß der Reibkörper (20; 40) einstückig ist und aus Reibmaterial besteht.

3. Element nach Anspruch 1, dadurch gekennzeichnet, daß der Reibkörper (30; 50) radial mehrteilig ist und mindestens aus zwei Reibbelägen (31, 33) besteht.

4. Element nach Anspruch 3, dadurch gekennzeichnet, daß zwischen den Reibbelägen (31, 33) ein Trägerkörper (32) angeordnet ist.

5. Element nach Anspruch 4, dadurch gekennzeichnet, daß der Trägerkörper (32) aus Metall, Kunststoff, Keramik oder Papier besteht.

6. Element nach einem der Ansprüche 1 bis 5, dadurch gekennzeichnet, daß der Reibkörper (20; 30; 30a) in einer radialen Eindrehung (13) des Grundkörpers (2; 29) angeordnet ist, deren axiale Breite (B) größer als oder gleich groß wie die radiale Breite (b) des Reibkörpers (20; 30) ist.

7. Element nach einem der Ansprüche 1 bis 5, dadurch gekennzeichnet, daß der Reibkörper (20') auf der kegelförmigen Oberfläche (12) aufliegt und in der Verjüngungsrichtung der Oberfläche (12) durch deren Konizität sowie in Öffnungsrichtung durch angrenzende Getriebeteile (23) axial gehalten ist.

8. Element nach einem der Ansprüche 1 bis 7 mit einer an eine kegelförmige Außenoberfläche (37) axial angrenzenden Ringschulter (43), dadurch gekennzeichnet, daß der Reibkörper (40) in einer radialen Eindrehung (38) in der Außenoberfläche (37) angeordnet ist, die in eine axiale Eindrehung (39) in der Ringschulter (43) übergeht.

9. Element nach einem der Ansprüche 1 bis 8, dadurch gekennzeichnet, daß der Reibkörper (50; 50a) mit einer radialen, umlaufenden Wulst (51) versehen ist, die in eine radiale Eindrehung (48; 48a) der kegelförmigen Fläche (47) greift.

10. Element nach einem der Ansprüche 1 bis 9, dadurch gekennzeichnet, daß der Reibkörper (20) aus einem gebogenen Zuschnitt besteht, dessen freies Ende mittels einer formschlüssigen Ausbildung (56, 57) miteinander verbunden sind.

11. Element nach einem der Ansprüche 1 bis 9, dadurch gekennzeichnet, daß der Reibkörper aus einem gebogenen Zuschnitt besteht, dessen freie Enden unverbunden sind.

Fig.1

Fig.2

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 208 747 (CAMPBELL) * Seite 3, rechte Spalte; Figuren 15,16 * | 1,3,4,6,7 | F 16 D 23/04 |
| Y | | 5,9 | |
| A | | 10,11 | |
| | --- | | |
| Y | US-A-2 319 740 (LAPSLEY) * Seite 2, rechte Spalte; Figur 7; Seite 3, linke Spalte; Figur 5 * | 5,9 | |
| | --- | | |
| X | US-A-2 144 674 (CAMPBELL) * Insgesamt * | 1,2,6 | |
| | --- | | |
| A | DE-A-3 328 812 (VEB IFA) * Insgesamt * | 1,2 | |
| | --- | | |
| A | FR-A-2 538 482 (VEB IFA) * Seite 4; Figur 2 * | 1,2 | |
| | --- | | |
| A | US-A-1 853 988 (MURRAY) * Insgesamt * | 6 | |
| | --- | | |
| A | US-A-3 374 870 (JOHNSTON, Jr.) | | |
| | --- | | |
| A | DE-A-2 421 963 (VOLKSWAGENWERK) | | |
| | ----- | | |

RECHERCHIERTE SACHGEBIETE (Int. Cl.4)

F 16 D 23/00

Der vorliegende Recherchenbericht wurde für alle Patentansprüche erstellt

| Recherchenort | Abschlußdatum der Recherche | Prüfer |
|---|---|---|
| DEN HAAG | 27-04-1988 | BALDWIN D.R. |

EPO FORM 1503 03.82 (P0403)